# EUROPÄISCHE PATENTANMELDUNG

(11) **EP 4 484 519 A1**
(43) Veröffentlichungstag der Anmeldung: **01.01.2025**
(21) Anmeldenummer: 23181958.2
(22) Anmeldetag: 28.06.2023
(51) Int. Cl.: C09K 5/10, C23F 11/00, F03D 80/60

(54) **NEUE ANWENDUNGEN FÜR KÜHLMITTEL**

(71) Anmelder: BASF SE, 67056 Ludwigshafen am Rhein (DE)
(72) Erfinder: Foerster, Uwe, 67956 Ludwigshafen am Rhein (DE); Kekljus, Ivana, 67956 Ludwigshafen am Rhein (DE); Wendling, Timo, 67956 Ludwigshafen am Rhein (DE); Mayer, Guido, 67956 Ludwigshafen am Rhein (DE)
(74) Vertreter: BASF IP Association

(57) **Zusammenfassung**

Die vorliegende Erfindung betrifft neue Anwendungen für Kühlmittel in Kühlsystemen von Windkraftanlagen.

## Beschreibung

Die vorliegende Erfindung betrifft bevorzugte Kühlmittel in Kühlsystemen von Windkraftanlagen.

Kühlmittel für Kraftfahrzeuge sind bereits seit langem bekannt und werden dort zur Abfuhr von Wärme besonders von Verbrennungsmotoren eingesetzt. In Windkraftanlagen wird im Betrieb ebenfalls Wärme freigesetzt und muss abgeführt werden, um dort mechanische oder elektrische Systeme, wie z.B. Generator, Getriebe, Lager, Umrichter und Stellsystem vor Überhitzung zu schützen. Gegenüber Kraftfahrzeugen sind Service- und Wartungsarbeiten bei Windkraftanlagen wesentlich komplizierter und aufwendiger, insbesondere bei offshore Windkraftanlagen, so dass besonders eine Verlängerung der Serviceintervalle anzustreben ist. Außerdem werden andere Anforderungen an Kühlmittel bei Windkraftanlagen gestellt als bei Kraftfahrzeugen, da andere Materialien in deren Kühlsystemen eingesetzt werden und die Betriebsbedingungen sich von denen eines Kraftfahrzeugs unterscheiden. So sind Kühlmittel in Verbrennungsmotoren eines Kraftfahrzeugs höheren Wandtemperaturen und somit höherer thermischer Belastung ausgesetzt, wohingegen in Windkraftanlagen eine hohe Korrosionsinhibierung der eingesetzten Werkstoffe und Wartungsintervalle von mindestens 5 Jahren gefordert werden.

Aufgabe der vorliegenden Erfindung war es also, Kühlmittel zur Verfügung zu stellen, die das besondere Anforderungsprofil von Windkraftanlagen und die Besonderheiten in deren Betrieb erfüllen.

Die Aufgabe wurde gelöst durch die Verwendung eines Kühlmittels, enthaltend
- mindestens ein Alkylenglykol, Alkylenglykolmonoalkylether oder Glycerin, bevorzugt Monoethylenglykol,
- optional mindestens eine organische Mono- oder Dicarbonsäure, bevorzugt aliphatische Mono- oder Dicarbonsäure,
- optional mindestens ein anorganisches Salz ausgewählt aus der Gruppe bestehend aus Molybdaten, Boraten, Phosphaten, Silikaten, Nitriten und Nitraten,
- mindestens eine Azolverbindung,
- Wasser,
- optional mindestens einen Kieselsäureester,
- optional mindestens ein Silikophosphonat, sofern Silikate anwesend sind, und
- optional weitere Inhibitoren und kühlmitteltypische Bestandteile,
mit der Maßgabe, dass mindestens eine Mono- oder Dicarbonsäure und/oder mindestens ein anorganisches Salz in dem Kühlmittel anwesend sind,

in einem Kühlsystem von Windkraftanlagen, bevorzugt in einem Kühlsystem zum Wärmemanagement mindestens eines Bestandteils einer Windkraftanlage ausgewählt aus der Gruppe bestehend aus
- Generator,
- Getriebe,
- Lager,
- Umrichter und
- Stellsystem.

Diese Kühlmittel und besonders die weiter unten aufgeführten Ausführungsformen erfüllen die Anforderungen und weisen eine ausreichend korrosionsinhibierende Wirkung für die eingesetzten Kühlsysteme als auch eine ausreichende Stabilität der enthaltenen Komponenten des Kühlmittels auf, so dass die Haltbarkeit des Kühlmittels erhöht und somit die Wartungsintervalle verlängert sind.

Besonders wird eine hohe Inhibierung der Korrosion von Aluminium gefordert, da Aluminium ein vielfach verbauter Werkstoff in den Kühlsystemen von Windkraftanlagen ist.

Die Komponenten des Kühlmittels seien im folgenden beschrieben:

### Gefrierpunktserniedrigende Komponente

Diese Komponente bewirkt in den Kühlmitteln die hauptsächliche Gefrierpunktserniedrigung. Dabei handelt es sich um monomere bis tetramere 1,2-Ethylenglykole, 1,2-Propylenglykole oder seltener um 1,3-Propylenglykole, bevorzugt um monomere bis trimere 1,2-Ethylenglykole oder 1,2-Propylenglykole, besonders bevorzugt um monomere oder dimere 1,2-Ethylenglykole, ganz besonders bevorzugt um monomeres 1,2-Ethylenglykol (Monoethylenglykol), sowie jeweils die Gemische davon.

Bei den Alkylenglykolmonoalkylethern handelt es sich um die Mono-C₁-C₄-alkylether der oben genannten Alkylenglykole, bevorzugt die Mono Methyl-, Ethyl- oder n-Butyl ether, besonders bevorzugt die Mono Methyl- oder n-Butyl ether und ganz besonders bevorzugt die Mono Methylether.

Ferner sind Glycerin oder Glycerinoligomere mögliche gefrierpunktserniedrigende Komponenten.

Bevorzugte Alkylenglykol-Komponenten bzw. Derivate sind insbesondere Monoethylenglykol, Diethylenglykol, Triethylenglykol, Tetraethylenglykol und deren Gemische, daneben aber auch Monopropylenglykol, Dipropylenglykol und deren Gemische, Polyglykole, Glykolether, beispielsweise Monoethylenglykol monomethylether, Diethylenglykol monomethylether, Triethylenglykol monomethylether, Tetraethylenglykol monomethylether, Monoethylenglykol monoethylether, Diethylenglykol monoethylether, Triethylenglykol monoethylether, Tetraethylenglykol monoethylether, Monoethylenglykol mono-n-butylether, Diethylenglykol mono-n-butylether, Triethylenglykol mono-n-butylether und Tetraethylenglykol mono-n-butylether, oder Glycerin jeweils allein oder als Mischungen hieraus verwendet werden.

Besonders bevorzugt werden Monoethylenglykol allein oder Mischungen von Monoethylenglykol als Hauptkomponente, d.h. mit einem Gehalt in der Mischung von mehr als 50 Gew.-%, insbesondere von mehr als 80 Gew.-%, vor allem von mehr als 95 Gew.-%, mit anderen Alkylenglykolen oder Derivaten von Alkylenglykolen.

Monoethylenglykol enthält herstellungsbedingt untergeordnete Mengen der höheren Homologen, besonders Diethylenglykol, Triethylenglykol und Tetraethylenglykol. In der Regel beträgt deren Gehalt in Summe bis zu 10 Gew%, bevorzugt bis zu 7,5 Gew% und ganz besonders bevorzugt bis zu 5 Gew%. Dabei nimmt der Anteil mit zunehmendem Molgewicht der Homologen in der Regel ab.

### Organische Mono- oder Dicarbonsäure

Die organischen Carbonsäuren werden häufig als Korrosionsinhibitoren gegen die Korrosion von Eisenwerkstoffen eingesetzt. Eisenwerkstoffe sind beispielsweise Stahl, Schmiede- oder Gusseisen.

Bei den organischen Mono- und Dicarbonsäuren kann es sich um aromatische oder aliphatische Carbonsäuren handeln, bevorzugt sind aromatische Monocarbonsäuren und aliphatische Mono- und Dicarbonsäuren; besonders bevorzugt aliphatische Mono- und Dicarbonsäuren.

Als aromatische Monocarbonsäuren ist Benzoesäure bevorzugt, die als freie Säure oder besonders bevorzugt in Form ihres Alkalimetallsalzes eingesetzt werden kann, ganz besonders bevorzugt als Natriumbenzoat.

Bevorzugte Monocarbonsäuren sind organische aliphatische Alkan- oder Alkencarbonsäuren. Diese werden, ausreichende Wasserlöslichkeit vorausgesetzt, in Kühlmitteln häufig als Korrosionsinhibitoren gegen die Korrosion von Eisenwerkstoffen eingesetzt.

Typische derartige Monocarbonsäuren sind Pentansäure, 2,2-Dimethylpropansäure, Hexansäure, 2,2-Dimethylbutansäure, Octansäure, 2-Ethylhexansäure, Nonansäure, Isononansäure, Decansäure, Undecansäure und Dodecansäure, sowie deren Isomerengemische, insbesondere 2-Ethylhexansäure und Isononansäure-Isomerengemische.

Beispiele für verzweigte aliphatische Monocarbonsäuren sind 2-Ethylhexansäure, 2,2-Dimethylhexansäure (Neooctansäure, Versatic Acid 8), 2,2-Dimethylheptansäure (Neononansäure, Versatic Acid 9), Isononansäure, 2-Propyl heptansäure, 2,2-Dimethyloctansäure (Neodecansäure, Versatic Acid 10), Neoundecansäure (Versatic Acid 11), Neododecansäure, und Neotridecansäure (Versatic Acid 13).

Der Einsatz von 2-Ethylhexansäure kann aus gesundheitlichen Gründen weniger bevorzugt sein. Bevorzugt beträgt der Gehalt an 2-Ethylhexansäure im Kühlmittel weniger als 3 %, besonders bevorzugt weniger als 0,3 %, ganz besonders bevorzugt enthalten die Kühlmittel keine 2-Ethylhexansäure.

Um den Gehalt an 2-Ethylhexansäure im Kühlmittel zu verringern oder zu vermeiden wird diese in einer Ausführungsform ganz oder teilweise, bevorzugt vollständig ersetzt durch mindestens eine andere der oben genannten aliphatischen Monocarbonsäuren, die nicht 2-Ethylhexansäure ist, besonders durch Isononansäure.

In einer bevorzugten Ausführungsform kann 2-Ethylhexansäure auch teilweise ersetzt werden durch eine Kombination von 2-Ethylhexansäure mit Benzoesäure.

In einer bevorzugten Ausführungsform kann 2-Ethylhexansäure auch ganz oder teilweise ersetzt werden durch eine Kombination von 2-Ethylhexansäure mit mindestens einer der oben genannten aliphatischen Dicarbonsäuren, besonders bevorzugt einer Kombination aus von 2-Ethylhexansäure mit Adipinsäure oder 2-Ethylhexansäure mit Sebacinsäure.

Besonders bevorzugt wird ein Gemisch aus mindestens zwei aliphatischen Dicarbonsäuren eingesetzt unter Verzicht auf oder 2-Ethylhexansäure, beispielsweise ein Gemisch aus Adipinsäure und Sebacinsäure.

Ebenfalls besonders bevorzugt ist ein Gemisch aus 2-Ethylhexansäure mit mindestens einem anorganischen Salz ausgewählt aus der Gruppe bestehend aus Molybdaten, Boraten, Phosphaten, Silikaten und Nitraten, ganz besonders bevorzugt ein Gemisch aus 2-Ethylhexansäure mit mindestens einem anorganischen Salz ausgewählt aus der Gruppe bestehend aus Molybdaten, Phosphaten und Silikaten.

Bei den 8 bis 13 Kohlenstoffatome aufweisenden Neoalkancarbonsäuren kann es sich um Isomerengemische handeln und nicht notwendigerweise um reine Isomere.

So ist beispielsweise Neodecansäure ein Gemisch von Carbonsäuren (CAS 26896-20-8) enthaltend 2,2,3,5-Tetramethylhexansäure, 2,4-Dimethyl-2-isopropylpentansäure, 2,5-Dimethyl-2-ethylhexansäure, 2,2-Dimethyloctansäure und/oder 2,2-Diethylhexansäure.

In einer bevorzugten Ausführungsform handelt es sich bei der aliphatischen Carbonsäure um Isononansäure. Im Rahmen dieser Schrift bezieht sich dies auf eine oder mehrere verwzeigte aliphatische Carbonsäuren mit 9 Kohlenstoffatomen. Ausführungsform von Isononansäure können 7-Methyloctansäure (z.B. CAS Nr. 693-19-6 und 26896-18-4), 6,6-Dimethylheptansäure (z.B. CAS Nr. 15898-92-7), 3,5,5-Trimethylhexansäure (z.B. CAS Nr. 3302-10-1), 3,4,5-Trimethylhexansäure, 2,5,5-Trimethylhexansäure, 2,2,4,4-Tetramethylpentansäure (z.B. CAS Nr. 3302-12-3) und Gemische daraus umfassen. In einer bevorzugten Ausführungsform enthält Isononansäure als Hauptkomponenten von mehr als 90% (in Summe) mindestens eine Carbonsäure ausgewählt aus der Gruppe bestehend aus 7-Methyloctansäure, 6,6-Dimethylheptansäure, 3,5,5-Trimethylhexansäure, 3,4,5-Trimethylhexansäure, 2,5,5-Trimethylhexansäure und 2,2,4,4-Tetramethylpentansäure auf. Der zu 100% fehlende Anteil kann andere Carbonsäuren mit 9 Kohlenstoffatomen umfassen und geringe Anteil von Nebenprodukten. In einer bevorzugten Ausführungsform enthält Isononansäure als Hauptkomponente zu mindestens 90%, bevorzugt zu mindestens 95% 3,5,5-Trimethylhexansäure.

Bei den 4 bis 20 Kohlenstoffatome aufweisenden organischen Dicarbonsäuren handelt es sich um lineare oder verzweigte Alkandicarbonsäuren, bevorzugt lineare Alkan- oder Alkendicarbonsäuren, besonders bevorzugt Alkandicarbonsäuren, besonders bevorzugt mit 5 bis 14 und ganz besonders bevorzugt mit 6 bis 12 Kohlenstoffatomen.

Bevorzugt sind die aliphatischen Dicarbonsäuren ausgewählt aus der Gruppe bestehend aus Bernsteinsäure, Maleinsäure, Fumarsäure, Glutarsäure, Adipinsäure, Pimelinsäure (Heptandisäure), Azelainsäure (Nonandisäure), Sebacinsäure (Dekandisäure), Undekandisäure, Dodekandisäure, sowie Alkyl- und Alkenylbernsteinsäuren und -glutarsäuren wie 2-Methylbutandisäure, 2-ethyl-3-methylbutandisäure, 2-Ethylpentandisäure, 2-Dodecylbutandisäure, 2-Dodecenylbutandisäure, 2-Phenylbutandisäure, 2-(p-Methyl phenyl) butandisäure, 2,2-Dimethylbutandisäure, 2,3,4-Trimethylpentandisäure, 2,2,3-Trimethylpentandisäure, Glutaconsäure (Pent-2-endisäure), Itaconsäure, Hex-2-endisäure, Hex-3-endisäure, 5-Methyl-hex-2-endisäure und 2,3-Diemethyl-pent-2-endisäure.

Unter diesen sind die Dicarbonsäuren bevorzugt, die 6 bis 12 Kohlenstoffatome aufweisen, besonders bevorzugt unter diesen die Alkandicarbonsäuren, die 6 bis 12 Kohlenstoffatome aufweisen, ganz besonders bevorzugt die linearen Alkandicarbonsäuren, die 6 bis 12 Kohlenstoffatome aufweisen.

Insbesondere bevorzugt sind als aliphatische Dicarbonsäuren Adipinsäure, Sebacinsäure, Azelainsäure und Dodecandicarbonsäure, speziell Adipinsäure, Sebacinsäure und Dodekandisäure, und am meisten Adipinsäure und Sebacinsäure.

### Anorganisches Salz

Die anorganischen Salze werden häufig als Korrosionsinhibitoren gegen die Korrosion von Eisen- und/oder Aluminium-haltigen Werkstoffen sowie Lot eingesetzt.

Das mindestens eine anorganische Salz ist ausgewählt aus der Gruppe bestehend aus Molybdaten, Boraten, Phosphaten, Silikaten, Nitriten und Nitraten, bevorzugt ausgewählt aus der Gruppe bestehend aus Boraten, Phosphaten, Silikaten, Nitriten und Nitraten, besonders bevorzugt ausgewählt aus der Gruppe bestehend aus Phosphaten, Silikaten, und Nitraten.

Bei den anorganischen Inhibitoren handelt es sich um Phosphate, Silikate, Borate, Nitriten, Nitrate oder Molybdate, oder deren Mischungen in Form ihrer freien Säuren oder ihrer Salze, besonders ihrer Alkalimetallsalze, besonders bevorzugt ihrer Natrium- oder Kaliumsalze. In welcher Form (protoniert oder als Salz) sie in den Zusammensetzungen, Superkonzentraten, Konzentraten oder Kühlmitteln vorliegen hängt von dem jeweiligen pKₛ-Wert der Verbindung und der Zusammensetzung sowie dem pH des jeweiligen Milieus ab, der sich durch die Menge an Base einstellt.

Die Molybdate werden als freie Säure (H₂MoO₄), als Hydrogenmolybdat oder bevorzugt als Molybdat eingesetzt, besonders als Alkalimetallsalze, besonders bevorzugt als Natrium- oder Kaliumsalze und ganz besonders bevorzugt als Natriumsalze. Dabei können die aciden Protonen in den Molybdaten teilweise oder vollständig durch Alkalimetallsalze ersetzt sein. Bevorzugt ist der Einsatz von Natriummolybdat, meist in Form des Dihydrates.

Die Borate werden bevorzugt als Natriumtetraborat (Borax) oder als Kaliumtetraborat eingesetzt, besonders bevorzugt als Natriumtetraborat.

Die Phosphate werden als freie Säure (H₃PO₄), als Hydrogenphosphat, Dihydrogenphosphat oder Phosphat eingesetzt, besonders als Alkalimetallsalze, besonders bevorzugt als Natrium-oder Kaliumsalze. Dabei können die aciden Protonen in den Phosphaten teilweise oder vollständig durch Alkalimetallsalze ersetzt sein.

Denkbar ist auch der Einsatz der entsprechenden Diphosphate, Triphosphate oder Oligophosphate, auch in Mischungen mit Monophosphaten, bevorzugt werden sie jedoch als monomere Phosphate eingesetzt.

Bevorzugt ist der Einsatz als freie Säure (H₃PO₄), Dinatriumhydrogenphosphat oder Trinatriumphosphat.

Die anorganischen Silikate wirken überwiegend als Inhibitor der Korrosion von Aluminium und Aluminium-haltigen Werkstoffen sowie Lot und werden meist als Alkalimetallsalze oder seltener als Magnesium-, Calcium- oder Aluminiumsalze eingesetzt, bevorzugt als Natrium- oder Kaliumsalze.

Die Silikate sind bevorzugt ausgewählt aus der Gruppe bestehend aus Orthosilikaten (SiO₄⁴⁻), Metasilikaten (SiO₃²⁻). and Pyrosilikaten (Si₂O₇⁶⁻), besonders bevorzugt handelt es sich um Metasilikate (SiO₃²⁻), ganz besonders bevorzugt um Natriummetasilikat (Na₂SiO₃) oder Kaliummetasilikat (K₂SiO₃), insbesondere um Natriummetasilikat (Na₂SiO₃).

Bei den Nitriten handelt es sich um sämtliche anorganische Salze des Nitritanions (NO₂⁻) sowie Salpetrigsäure (HNO₂). Typischerweise wird Nitrit in Form von Natriumnitrit oder Kaliumnitrit in Kühlmitteln eingesetzt oder wird durch die anorganischen Basen, bevorzugt Natriumhydroxid oder Kaliumhydroxid, in diese überführt.

In einer bevorzugten Ausführungsform enthalten die Kühlmittel aus gesundheitlichen Gründen kein Nitrit.

Die Nitrate werden als Alkali- oder Erdalkalimetallnitrate eingesetzt, bevorzugt als Natriumnitrat, Kaliumnitrat oder Magnesiumnitrat, bevorzugt als Natriumnitrat oder Kaliumnitrat, besonders bevorzugt als Natriumnitrat.

Bevorzugte anorganische Salze sind ausgewählt aus der Gruppe bestehend aus Molybdaten, Boraten, Phosphaten, Silikaten und Nitraten, besonders bevorzugt ausgewählt aus der Gruppe bestehend aus Molybdaten, Boraten, Phosphaten und Silikaten, ganz besonders bevorzugt ausgewählt aus der Gruppe bestehend aus Molybdaten, Phosphaten und Silikaten.

### Azolverbindung

Die Azolverbindungen wirken besonders als Korrosionsinhibitor gegen die Korrosion von Buntmetallen, beispielsweise Messing oder Kupfer.

Unter Azolverbindungen oder Azolderivaten werden im Rahmen dieser Schrift fünfgliedrige heterocyclische Verbindungen mit 2 oder 3 Heteroatomen aus der Gruppe Stickstoff und Schwefel, welche kein oder maximal ein Schwefelatom in den Ring eingebaut enthalten und welche optional einen aromatischen oder gesättigten sechsgliedrigen Anellanten tragen können.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel 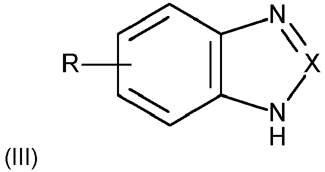 oder

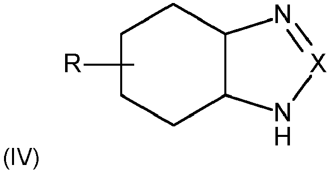

in denen die Variable
R Wasserstoff oder einen C₁- bis C₁₀-Alkylrest, insbesondere Methyl oder Ethyl, bedeutet und die Variable X ein Stickstoffatom oder die Gruppierung C-H bezeichnet.

Typische und bevorzugte Beispiele für Azolderivate der allgemeinen Formel (III) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (IV) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (V) 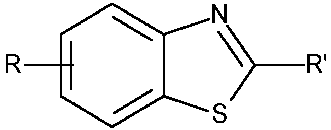 in der
die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe (-SH) bezeichnet. Denkbar, wenn auch weniger bevorzugt kann R' auch ein Carboxyalkylrest der Formel -(CₘH₂ₘ)-COOR" sein, wobei m für eine Zahl von 1 bis 4 steht und R" Wasserstoff oder C₁- bis C₁₀-Alkyl, insbesondere Methyl oder Ethyl, oder C₆- bis C₁₂-Aryl bedeutet. Beispiele dafür sind (2-Benzothiazylthio)-essigsäure, (2-Benzothiazylthio)-essigsäure ester, 3-(2-Benzothiazylthio)-propionsäure oder 3-(2-Benzothiazylthio)-propionsäure ester. Für den Fall, dass diese Verbindungen als Säure eingesetzt werden, so zählen sie nicht zu den erfindungsgemäß ausgeschlossenen Carbonsäuren. Ein typisches Beispiel für ein Azolderivat der allgemeinen Formel (V) ist 2-Mercaptobenzthiazol.

Weiterhin werden nicht-anellierte Azolderivate der allgemeinen Formel (VI) 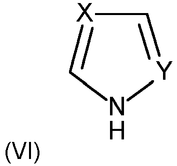 in der die Variablen
X und Y zusammen zwei Stickstoffatome oder
ein Stickstoffatom und eine Gruppierung C-H bezeichnen,
beispielsweise 1H-1,2,4-Triazol (X = Y = N) oder bevorzugt Imidazol (X = N, Y = C-H).

Ganz besonders bevorzugt werden für die vorliegende Erfindung als Azolderivate Benzimidazol, Benzotriazol, Tolutriazol, hydriertes Tolutriazol oder Mischungen hieraus, insbesondere Benzotriazol oder Tolutriazol, speziell Tolutriazol.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 zugänglich und auch kommerziell verfügbar.

Bevorzugt sind die Azole ausgewählt aus der Gruppe bestehend aus Benzotriazol, Tolutriazol, (2-Benzothiazylthio)-essigsäure, 3-(2-Benzothiazylthio)-propionsäure und 2-Mercaptobenzthiazol.

### Wasser

Das im Rahmen der vorliegenden Erfindung eingesetzte Wasser sollte neutral mit einem pH-Wert um 7 sein, dabei kann es sich um demineralisiertes oder destilliertes Wasser handeln, was jedoch nicht zwingend erforderlich ist. Um den Einsatz auch harten Wassers zu ermöglichen, kann der Kühlmittelzusammensetzung mindestens ein Hartwasserstabilisator zugesetzt werden.

Das eingesetzte Wasser kann Erdalkalimetallionen enthalten, beispielsweise Magnesium-, Calcium-, Strontium- oder Bariumionen, wobei letztere üblicherweise höchstens in Spuren enthalten sind. Bevorzugt sind als Härtebildner im wesentlichen lediglich Magnesium- und/oder Calciumionen enthalten.

Bei dem eingesetzten Wasser handelt es sich bevorzugt um weiches Wasser mit einer Wasserhärte von nicht mehr als 8,4 °dH, besonders bevorzugt von nicht mehr als 10 und ganz besonders bevorzugt nicht mehr als 12 °dH.

Bei Einsatz von Wasser mit einer Wasserhärte von bis zu 14 °dH, bevorzugt bis zu 17, besonders bevorzugt bis zu 20 und sogar bis zu 25 °dH ist in der Regel ein Hartwasserstabilisator erforderlich.

Das im Kühlmittel eingesetzte Wasser ist über die Härtebildner die übliche Quelle für eventuell in dem Kühlmittel enthaltenes Carbonat und/oder Sulfat.

### Kieselsäureester

Anstelle oder zusätzlich zu den genannten anorganischen Silikaten können die Kühlmittel auch organische ortho-Kieselsäureester der allgemeinen Formel Si(OR)₄ enthalten, worin jedes R unabhängig voneinander C₁-C₄-Alkyl, bevorzugt Methyl, Ethyl oder n-Butyl, besonders bevorzugt Methyl oder Ethyl oder Gemische aus Methyl und Ethyl bedeuten.

Die ortho-Kieselsäureester wirken überwiegend als Inhibitor der Korrosion von Aluminium oder Aluminium-haltigen Werkstoffen sowie Lot.

### Silikophosphonat

Wenn die Zusammensetzung mindestens ein anorganisches Silikat enthält, so wird in einer bevorzugten Ausführungsform zusätzlich zu dem Silikat mindestens ein Silicophosphonat zudosiert, wie es beschrieben ist in der Europäischen Patentanmeldung EP 4015596.

Bevorzugt handelt es sich bei dem Silicophosphonat um eine Verbindung der allgemeinen Formel 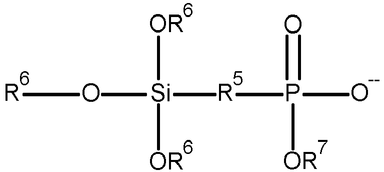 worin
R⁵ ein zweibindiger organischer Rest ist, bevorzugt eine 1,ω-Alkylen Gruppe mit 1 bis 6, bevorzugt 1 bis 4 Kohlenstoffatomen, besonders bevorzugt Methylen, 1,2-Ethylen, 1,2-Propylen, 1,3-Propylen oder 1,4-Butylen, ganz besonders bevorzugt 1,2-Ethylen oder 1,3-Propylen und insbesondere 1,2-Ethylen,
R⁶ unabhängig voneinander Wasserstoff, C₁- bis C₄-Alkyl oder Hydroxy-C₂- bis C₄-Alkyl, bevorzugt Wasserstoff, Methyl, Ethyl, n-Propyl, iso-Propyl, n-Butyl, iso-Butyl, sec-Butyl oder tert-Butyl, 2-Hydroxyethyl oder 2-Hydroxypropyl, besonders bevorzugt Wasserstoff, Methyl, Ethyl oder Propyl,
und R⁷ ist C₁- bis C₄-Alkyl, bevorzugt Methyl, Ethyl, n-Propyl oder n-Butyl, besonders bevorzugt Methyl, Ethyl oder n-Butyl, ganz besonders bevorzugt Methyl oder Ethyl und insbesondere Methyl.

Die Silicophosphonate können als freie Säure oder als Alkalimetallsalz eingesetzt werden, bevorzugt als Natrium- oder Kaliumsalz und besonders bevorzugt als Natriumsalz.

### Weitere Inhibitoren und kühlmitteltypische Bestandteile

Als weitere übliche Hilfsmittel können die Kühlmitte optional in üblichen geringen Mengen noch Entschäumer (in der Regel in Mengen von 0,003 bis 0,008 Gew.-% in dem fertig verdünnten Kühlmittel) sowie aus Gründen der Hygiene und der Sicherheit im Falle eines Verschluckens Bitterstoffe (z. B. vom Typ Denatoniumbenzoat) und Farbstoffe enthalten.

Ferner können die Zusammensetzung einen oder mehrere Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen enthalten. Der Anteil in der Zusammensetzung werden so gewählt, dass nach entsprechender Verdünnung die Menge in dem fertig verdünnten Kühlmittel bis zu 1 Gew.-% beträgt.

In einer bevorzugten Ausführungsform handelt es sich um einen Hartwasserstabilisator wie beschrieben in der WO 2022/200155.

Es stellt einen Vorteil des Einsatzes von Hartwasserstabilisatoren dar, dass die Verwendung von demineralisiertem oder destilliertem Wasser nicht erforderlich ist, um die Ausfällungen von Erdalkalimetallverbindungen zu verringern oder zu verhindern.

### Zusammensetzung der Kühlmittel

Die in den Windkraftanlagen einsatzbereiten Kühlmittel werden bevorzugt durch Verdünnung von Konzentraten (siehe unten) mit Wasser hergestellt und sind beispielsweise zusammengesetzt wie folgt:
- 40 bis 75 Gew% Wasser, bevorzugt 45 bis 70, besonders bevorzugt 50 bis 70, ganz besonders bevorzugt 55 bis 67,5 und insbesondere 60 bis 65 Gew%,
- 20 bis 55 Gew% Alkylenglykol, Alkylenglykolmonoalkylether und Glycerin, bevorzugt 25 bis 50, besonders bevorzugt 25 bis 45, ganz besonders bevorzugt 30 bis 50 und insbesondere mindestens 32,5 bis 35 Gew%,
- in Summe 0,1 bis 5 Gew%, bevorzugt 0,25 bis 4,5, ganz besonders bevorzugt 0,5 bis 4 und insbesondere 1 bis 4 Gew% der folgenden Komponenten:
   -- optional mindestens eine organische Mono- oder Dicarbonsäure, bevorzugt aliphatische Mono- oder Dicarbonsäure,
   -- optional mindestens ein anorganisches Salz ausgewählt aus der Gruppe bestehend aus Molybdaten, Boraten, Phosphaten, Silikaten, Nitriten und Nitraten,
   -- mindestens eine Azolverbindung
   -- optional mindestens einen Kieselsäureester,
   -- optional mindestens ein Silikophosphonat, sofern Silikate anwesend sind, sowie
- optional 0 bis zu 1 Gew%, bevorzugt 0 bis zu 0,75, besonders bevorzugt 0,05 bis 0,5, ganz besonders bevorzugt 0,1 bis 0,4 und insbesondere 0,2 bis 0,3 Gew% weitere Inhibitoren und kühlmitteltypische Bestandteile,

mit der Maßgabe, dass mindestens eine Mono- oder Dicarbonsäure und/oder mindestens ein anorganisches Salz in dem Kühlmittel anwesend sind,
mit der Maßgabe, dass die Summe aller Komponenten stets 100 Gew% ergibt.

In einer bevorzugten Ausführungsform enthält das Kühlmittel
- mindestens ein Alkylenglykol, Alkylenglykolmonoalkylether oder Glycerin, bevorzugt Monoethylenglykol
- mindestens eine aromatische organische Monocarbonsäure,
- mindestens ein anorganisches Salz ausgewählt aus der Gruppe bestehend aus Molybdaten, Boraten, Phosphaten, Silikaten, Nitriten und Nitraten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff.

In einer gleichermaßen bevorzugten Ausführungsform enthält das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure, besonders bevorzugt mindestens eine aliphatische Monocarbonsäure und mindestens eine aliphatische Dicarbonsäure oder besonders bevorzugt mindestens zwei aliphatische Dicarbonsäuren, insbesondere mindestens zwei aliphatische Dicarbonsäuren unter Verzicht auf 2-Ethylhexansäure, und speziell mindestens zwei aliphatische Dicarbonsäuren unter Verzicht auf Monocarbonsäuren,
- mindestens eine Azolverbindung
- Wasser
- optional Hartwasserstabilisator, Bitterstoff, Entschäumer und/oder Farbstoff,
mit der Maßgabe, dass kein anorganisches Salz ausgewählt aus der Gruppe bestehend aus Molybdaten, Boraten, Phosphaten, Silikaten, Nitriten und Nitraten in dem Kühlmittel anwesend sind.

In einer gleichermaßen bevorzugten Ausführungsform enthält das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure, besonders bevorzugt mindestens eine aliphatische Monocarbonsäure und mindestens eine aliphatische Dicarbonsäure,
- mindestens ein anorganisches Salz ausgewählt aus der Gruppe bestehend aus Boraten, Phosphaten, Silikaten, Nitriten und Nitraten,
- mindestens eine Azolverbindung
- Wasser
- optional Hartwasserstabilisator, Bitterstoff, Entschäumer und/oder Farbstoff.

In einer gleichermaßen bevorzugten Ausführungsform enthält das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure, besonders bevorzugt mindestens eine aliphatische Monocarbonsäure und mindestens eine aliphatische Dicarbonsäure oder besonders bevorzugt mindestens zwei aliphatische Dicarbonsäuren,
- mindestens ein anorganisches Salz ausgewählt aus der Gruppe bestehend aus Molybdaten, Boraten, Phosphaten, Silikaten und Nitraten, bevorzugt ausgewählt aus der Gruppe bestehend aus Phosphaten und Silikaten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff.

In diesen genannten Ausführungsformen handelt es sich bei den Azolverbindungen bevorzugt um Benzotriazol oder Tolutriazol.

Bei den nicht-aliphatischen organischen Monocarbonsäuren handelt es sich bevorzugt um Benzoesäure.

Die aliphatischen Monocarbonsäuren sind bevorzugt ausgewählt aus der Gruppe bestehend aus 2-Ethylhexansäure und Isononansäure, besonders bevorzugt Isononansäure.

Die aliphatischen Dicarbonsäuren sind bevorzugt ausgewählt aus der Gruppe bestehend aus Adipinsäure, Sebacinsäure und Dodekandisäure.

Die anorganischen Salze sind bevorzugt ausgewählt aus der Gruppe bestehend aus Molybdaten, Boraten, Phosphaten und Silikaten, besonders bevorzugt ausgewählt aus der Gruppe bestehend aus Molybdaten, Phosphaten und Silikaten, ganz besonders bevorzugt ausgewählt aus der Gruppe bestehend aus Phosphaten und Silikaten.

Das Kühlmittel sollte bei einer Temperatur von 20°C eine kinematische Viskosität gemäß ASTM D445 von 3 mm²/s nicht überschreiten, bevorzugt nicht mehr als 2,5, besonders bevorzugt nicht mehr als 2 mm²/s, ganz besonders bevorzugt nicht mehr als 1.5 und insbesondere nicht mehr als 1 mm²/s.

Bei einer Temperatur von 0 °C sollte das Kühlmittel eine kinematische Viskosität gemäß ASTM D445 von 7,5 mm²/s nicht überschreiten, bevorzugt nicht mehr als 7, besonders bevorzugt nicht mehr als 6 mm²/s, ganz besonders bevorzugt nicht mehr als 5,5 und insbesondere nicht mehr als 5 mm²/s.

Bei einer Temperatur von 80 °C sollte das Kühlmittel eine kinematische Viskosität gemäß ASTM D445 von 1 mm²/s nicht überschreiten, bevorzugt nicht mehr als 0,9, besonders bevorzugt nicht mehr als 0,8 mm²/s, ganz besonders bevorzugt nicht mehr als 0,7 und insbesondere nicht mehr als 0,6 mm²/s.

Um die zu transportierenden Volumina zu verringern, werden zumeist Konzentrate vertrieben, in denen der Wasseranteil weggelassen oder stark reduziert wird. Die Kühlmittel werden dann vor Befüllen der Windkraftanlage aus den Konzentraten durch Wasserzugabe hergestellt. Üblicherweise werden diese Konzentrate im Volumenverhältnis 1 : 1 bis 1 : 3 (Vol/Vol), bevorzugt 1 : 1 bis 1 : 2 mit Wasser verdünnt, je nach der herrschenden Temperatur vor Ort und Anforderungen an den Gefrierschutz.

Die Konzentrate sind dementsprechend zusammengesetzt wie die oben angeführten Kühlmittel, jedoch mit einem je nach Verdünnungsverhältnis verringerten Wasseranteil. In der Regel beträgt der Wasseranteil im Konzentrat nicht mehr als 15, bevorzugt nicht mehr als 10 und besonders bevorzugt nicht mehr als 5 Gew%.

Beispielsweise sind die Konzentrate zusammengesetzt wie folgt:
- 0,1 bis 15 Gew% Wasser
- 50 bis 95 Gew% Alkylenglykol, Alkylenglykolmonoalkylether und Glycerin,
- in Summe 0,5 bis 15 Gew% der folgenden Komponenten:
   -- optional mindestens eine organische Mono- oder Dicarbonsäure, bevorzugt aliphatische Mono- oder Dicarbonsäure,
   -- optional mindestens ein anorganisches Salz ausgewählt aus der Gruppe bestehend aus Molybdaten, Boraten, Phosphaten, Silikaten, Nitriten und Nitraten,
   -- mindestens eine Azolverbindung
   -- optional mindestens einen Kieselsäureester,
   -- optional mindestens ein Silikophosphonat, sofern Silikate anwesend sind, sowie
- optional 0 bis zu 3 Gew% weitere Inhibitoren und kühlmitteltypische Bestandteile,

mit der Maßgabe, dass mindestens eine Mono- oder Dicarbonsäure und/oder mindestens ein anorganisches Salz in dem Kühlmittel anwesend sind,
mit der Maßgabe, dass die Summe aller Komponenten stets 100 Gew% ergibt.

Der pH-Wert der Kühlmittel beim Endanwender liegt üblicherweise im Bereich von 4 bis 11,5, vorzugsweise 5 bis 10, insbesondere 6 bis 9.

Um diesen pH-Wert einzustellen werden bei dem Herstellungsverfahren der Kühlmittel aus einer konzentrierten Vorstufe auf einer beliebigen Stufe mindestens eine anorganische Base zugegeben. Dabei kann die mindestens eine anorganische Base im Kühlmittel oder im Konzentrat enthalten sein oder bei der Herstellung des Kühlmittels aus dem Konzentrat durch Vermischen mit Wasser zugegeben werden.

Bevorzugte anorganische Basen sind Alkalimetallhydroxide, besonders bevorzugt festes Lithium-, Natrium- oder Kaliumhydroxid, gegebenenfalls auch in Form von wässriger Lithium-, Natron- oder Kalilauge.

Weniger bevorzugt sind Carbonate oder Hydrogencarbonate des Lithium, Natrium oder Kalium.

Bevorzugte Alkalimetalle sind Natrium und Kalium.

Es ist denkbar, das Kühlmittel durch Verdünnen der Konzentrate mit Wasser in dem gewünschten Verdünnungsverhältnis direkt beim Betanken der Windkraftanlage herzustellen. Dies hat jedoch den Nachteil, dass sowohl Wasser als auch Konzentrat zur Windkraftanlage transportiert und dort z.B. über Pumpen oder statische Mischer im korrekten Verhältnis vermischt werden müssen. Die Vermischung des Konzentrats mit Wasser erfolgt in der Regel durch Energieeintrag durch Scherenergie. Dies kann beispielsweise in dynamischen Mischapparaten, d.h. durch Vermischen mittels Rührer oder durch Umpumpen (Naturumlauf oder Zwangsumlauf) bzw. Umpumpen mit statischen Mischorganen wie statischen Mischern oder Düsen im Umpumpkreis, durch statische Mischapparate wie statische Mischer, Düsen, Blenden, Y- oder T-Stücke im Zulauf des Ansatzbehälters, oder durch dynamische Mischapparate wie Mischpumpen oder Rührkessel erfolgen.

Daher werden üblicherweise die Kühlmittel an einem ersten Ort, z.B. bei einem Formulierer durch Vermischen der Konzentrate mit Wasser in dem gewünschten Verdünnungsverhältnis hergestellt, das mit Wasser verdünnte Kühlmittel dann zur Windkraftanlage an einen zweiten Ort transportiert und dort das Kühlsystem der Windkraftanlage mit dem fertig abgemischten Kühlmittel betankt.

Bei neu zu errichtenden Windkraftanlagen ist dieser zweite Ort zumeist der Montageort für die Gondel.

Bei bestehenden Windkraftanlagen ist der zweite Ort der Standort der Windkraftanlage, also bei offshore-Anlagen auf See bzw. bei onshore-Anlagen an Land.

Die Befüllung von bestehenden Windkraftanlagen erfolgt bei Umgebungstemperatur, bevorzugt bei einer Temperatur von 15 bis 35 °C. Eine Temperatur von -10 °C sollte nicht unterschritten werden. Da das Kühlmittel in der Regel auf die Höhe der Gondel der Windkraftanlage gefördert werden muss, wo sich das Kühlsystem befindet, und sich diese Gondel auf einer Höhe von 50 bis 150 m befindet, Planungen reichen sogar bis zu 200 m, sollte die Temperatur des Kühlmittels beim Befüllen des Kühlsystems der Windkraftanlage so beschaffen sein, dass die Viskosität des Kühlmittels bei der Fördertemperatur 3 mm²/s nicht überschreitet, bevorzugt nicht mehr als 2,5, besonders bevorzugt nicht mehr als 2 mm²/s, ganz besonders bevorzugt nicht mehr als 1.5 und insbesondere nicht mehr als 1 mm²/s, da ansonsten das Kühlmittel nur schwer auf diese Höhe pumpbar ist. Eine niedrige Viskosität ist anzustreben, da dies eine geringere Pumpenleistung erforderlich macht und bei schnelllaufenden Pumpen beispielsweise zu Kavitation führen kann. Sollte die Viskosität des Kühlmittels für die Förderung per Pumpe zu hoch sein, so kann es sinnvoll sein, das Kühlmittel leicht zu erwärmen, um die Viskosität zu senken und das so erwärmte Kühlmittel dann in einem isolierten oder thermostatierten Behälter zur Windkraftanlage zu transportieren. In der Regel ist dafür eine Temperatur des Kühlmittels bis zu 25 °C über der Umgebungstemperatur ausreichend, bevorzugt bis zu 20, besonders bevorzugt bis zu 15 und ganz besonders bevorzugt bis zu 10 °C.

Alternativ kann das Kühlmittel auch in einem geeigneten Behälter per Kran oder Aufzug auf die Höhe des Kühlmitteltanks der Windkraftanlage transportiert und dort ausgetauscht werden. Dies ist besonders dann bevorzugt, wenn das Kühlmittel zum Pumpen zu hochviskos ist oder eine entsprechende Pumpe nicht verfügbar ist.

Das gebrauchte Kühlmittel wird nach dem Austausch gesammelt und kann beispielsweise über Kläranlagen entsorgt oder wiedergewonnen werden.

### Windkraftanlage

Die zu kühlenden Bestandteile von Windkraftanlagen umfassen in der Regel zumindest einen ausgewählt aus der Gruppe bestehend aus Generator, Getriebe, Lager, Umrichter und Stellsystem.

Im Getriebe wird die niedrige Drehzahl des Rotors in eine hohe Drehzahl für den Generator übersetzt mit der Folge, dass kleinere Generatoren eingesetzt werden können. Es ist jedoch auch möglich, eine Windkraftanlage ohne Getriebe zu betreiben. In diesem Fall ist der Generator direkt an den Rotor gekoppelt und dreht sich mit der gleichen Drehzahl wie der Rotor. Dies ist konstruktiv einfacher, da auf das Getriebe verzichtet werden kann, jedoch müssen die Generatoren in getriebelosen Windkraftanlagen deutlich größer ausgelegt werden.

Somit ist das Getriebe nicht notwendigerweise bei jeder Windkraftanlage vorhanden.

Mit dem zumeist hydraulischen Stellsystem wird der Rotor durch die Steuerung der Windkraftanlage in der Regel automatisch zur Optimierung der Stromerzeugung in den Wind gedreht (Windnachführung). Dies umfasst sowohl die Ausrichtung der Nabe zur Windrichtung als auch den Anstellwinkel der Rotorblätter in den Wind. Bei zu hohen Windstärken kann der Rotor zum Schutz der Anlage auch aus dem Wind bzw. die Rotorblätter in sogenannte Segelstellung gedreht werden.

Es stellt eine bevorzugte Ausführungsform dar, Getriebe (sofern vorhanden) und/oder Stellsystem der Windkraftanlage zu kühlen und die dort erzeugte Wärme über das Kühlmittel abzuführen. In einer besonders bevorzugten Ausführungsform werden Getriebe und Stellsystem in einem gemeinsamen Kühlkreislauf gekühlt.

Der Rotor wird durch die kinetische Energie des Windes in eine Drehbewegung versetzt und treibt einen Generator im Inneren der Gondel an, der wiederum die mechanische Energie in elektrische Energie umwandelt. Der durch den Generator erzeugte Strom kann nun in das Stromnetz eingespeist werden. Bei den meisten Anlagen sorgt ein Umrichter dafür, dass der eingespeiste Strom die für das nationale bzw. regionale Stromnetz erforderliche Frequenz von zumeist 50 bis 60 Hertz hat.

Es stellt eine bevorzugte Ausführungsform dar, Generator und/oder Umrichter der Windkraftanlage zu kühlen und die dort erzeugte Wärme über das Kühlmittel abzuführen. In einer besonders bevorzugten Ausführungsform werden Generator und Umrichter in einem gemeinsamen Kühlkreislauf gekühlt.

Ein weiterer Gegenstand der vorliegenden Erfindung ist ein Verfahren zum Wärmemanagement von Bestandteilen von Windkraftanlagen, in dem Wärme von mindestens einem Bestandteil einer Windkraftanlage ausgewählt aus der Gruppe bestehend aus
- Generator,
- Getriebe,
- Lager,
- Umrichter und
- Stellsystem
bei einer höheren Temperatur über mindestens einen ersten Wärmetauscher auf ein Kühlmittel wie oben beschrieben übertragen wird, dieses Kühlmittel in einem Kühlkreislauf zu mindestens einem zweiten Wärmetauscher geführt wird und dort bei einer niedrigeren Temperatur Wärme vom Kühlmittel abgeführt wird, in dem
- als Kühlmittel eine Zusammensetzung wie oben beschrieben eingesetzt wird,
- die höhere Temperatur von 20 bis 100 °C, bevorzugt 25 bis 80, besonders bevorzugt 30 bis 60 °C beträgt,
- die niedrigere Temperatur von minus 50 bis 40 °C, bevorzugt minus 40 bis 40, besonders bevorzugt minus 30 bis 35 °C beträgt und
- die niedrigere Temperatur mindestens 5 °C, bevorzugt mindestens 10, besonders bevorzugt mindestens 15 und ganz besonders bevorzugt mindestens 20 °C niedriger liegt als die höhere Temperatur.

Dabei handelt es sich bei der höheren Temperatur bevorzugt um die Wandtemperaturen des jeweiligen Bestandteils der Windkraftanlage während des üblichen Betriebes der Windkraftanlage.

Die niedrigere Temperatur ist dabei bevorzugt die Umgebungstemperatur, mit der das erwärmte Kühlmittel im zweiten Wärmetauscher in Kontakt gebracht wird.

Es ist möglich, wenn auch weniger bevorzugt, dass bei offshore Windkraftanlagen die niedrigere Temperatur diejenige von Meerwasser am Standort der Windkraftanlage ist. In diesem Fall liegt die niedrigere Temperatur bei 0 bis 30 °C, bevorzugt 1 bis 25, besonders bevorzugt 2 bis 20 und ganz besonders bevorzugt 3 bis 15 °C.

Es stellt einen Vorteil der in dieser Schrift beschriebenen Kühlmittel dar, dass die Windkraftanlagen mit diesen Kühlmitteln in der Regel mindestens 5, bevorzugt mindestens 7, besonders bevorzugt mindestens 8 und ganz besonders bevorzugt mindestens 10 Jahre betrieben werden können, ohne dass ein Wechsel des Kühlmittels erforderlich ist. Es ist sogar denkbar, dass das Kühlmittel während der gesamten Betriebsdauer der Windkraftanlage nicht ausgetauscht werden muss, also bis zu 25, bevorzugt bis zu 30 Jahren.

Bei allen Wärmetauschern kann es sich um an sich bekannte Bauteile handeln, die dem Fachmann für diese Zwecke bekannt sind.

Angaben zu Prozent, ppm oder Teilen in dieser Schrift beziehen sich auf Gew%, Gew.ppm oder Gewichtsteile, sofern nicht anders angegeben.

Viskositätsangaben in dieser Schrift beziehen sich auf ASTM D445 bei 20 °C, sofern nicht anders angegeben.

### Beispiele

Ein erfindungsgemäßes Kühlmittel 1 basierend auf Ethylenglykol mit einer Mischung aus Adipinsäure, Sebacinsäure und Tolutriazol als Inhibitorkomponenten wie beschrieben in den Beispielen der WO 02/90462 A1 einem Korrosionstest gemäß ASTM D 1384 (Glassware Corrosion Test, 336 Stunden bei 88 °C, 33 %ige Lösungen) unterzogen. Negative Werte bedeuten eine Zunahme des Gewichts des Prüfkörpers.

Des weiteren wurde ein Kühlmittel 2, basierend auf Ethylenglykol mit einer Mischung von Molybdat, 2-Ethylhexansäuren und Tolutriazol einem Korrosionstest gemäß ASTM D 1384 unterzogen. Bei dieser Untersuchung wurden jeweils drei Metallplättchen jeder Probe in den Test eingesetzt und die Ergebnisse des Wägeverlustes auf eine signifikante Stelle ohne Nachkommastelle gerundet.

Als weniger bevorzugtes Kühlmittel 0 wurde ein kommerziell verfügbares Produkt herangezogen, das mit einer Schutzwirkung von 6 Jahren in stationären Anlagen beworben wird. Windkraftanlagen werden nicht erwähnt. Dieses Produkt enthält laut Sicherheitsdatenblatt 2-Ethylhexansäure als Inhibitorkomponente und ist laut den zugehörigen Produktinformationen frei von Nitrit, Aminen, Phosphat, Borat und Silikat. Ferner enthält dieses Kühlmittel vermutlich noch Sebacinsäure.

| | Kühlmittel 0 *) | Kühlmittel 1 | Kühlmittel 2 | |
|---|---|---|---|---|
| | Abtrag | Abtrag | Abtrag | Grenze gemäß ASTM D 3306 |
| | mg/Prüfkörper | mg/Prüfkörper | mg/Prüfkörper | mg/Prüfkörper |
| Kupfer | 1,9 | -0,8 | 1 | 10 max |
| Weichlot | 0,1 | -1,2 | -1 | 30 max |
| Messing | 1,6 | -0,9 | 2 | 10 max |
| Stahl | -0,5 | 0,1 | 0 | 10 max |
| Grauguss | -1,4 | 1,3 | 1 | 10 max |
| Gussaluminium | 4,6 | -4,0 | 2 | 30 max |

| | | | | |
|---|---|---|---|---|
| *) Die Werte gemäß dem Korrosionstest gemäß ASTM D1384 sind den Produktinformationen entnommen. | | | | |

Man sieht, dass die Kühlmittel 1 und besonders 2 bessere Korrosionsergebnisse zeigen, als Kühlmittel 0, besonders in Bezug auf die Aluminiumkorrosion und somit für Kühlsysteme mit Aluminiumbauteilen besser geeignet sind.

## Patentansprüche

1. Verwendung eines Kühlmittels, enthaltend
- mindestens ein Alkylenglykol, Alkylenglykolmonoalkylether oder Glycerin, bevorzugt Monoethylenglykol,
- optional mindestens eine organische Mono- oder Dicarbonsäure, bevorzugt aliphatische Mono- oder Dicarbonsäure,
- optional mindestens ein anorganisches Salz ausgewählt aus der Gruppe bestehend aus Molybdaten, Boraten, Phosphaten, Silikaten, Nitriten und Nitraten,
- mindestens eine Azolverbindung,
- Wasser,
- optional mindestens einen Kieselsäureester,
- optional mindestens ein Silikophosphonat, sofern Silikate anwesend sind, und
- optional weitere Inhibitoren und kühlmitteltypische Bestandteile,
mit der Maßgabe, dass mindestens eine Mono- oder Dicarbonsäure und/oder mindestens ein anorganisches Salz in dem Kühlmittel anwesend sind,
in einem Kühlsystem von Windkraftanlagen, bevorzugt in einem Kühlsystem zum Wärmemanagement mindestens eines Bestandteils einer Windkraftanlage ausgewählt aus der Gruppe bestehend aus
- Generator,
- Getriebe,
- Lager,
- Umrichter und
- Stellsystem.

2. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens ein anorganisches Salz ausgewählt aus der Gruppe bestehend aus Molybdaten, Boraten, Phosphaten, Silikaten, Nitriten und Nitraten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff enthält,
mit der Maßgabe, dass keine Mono- oder Dicarbonsäuren in dem Kühlmittel anwesend sind.

3. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono-oder Dicarbonsäure, besonders bevorzugt mindestens eine aliphatische Monocarbonsäure und mindestens eine aliphatische Dicarbonsäure oder besonders bevorzugt mindestens zwei aliphatische Dicarbonsäuren, insbesondere mindestens zwei aliphatische Dicarbonsäuren unter Verzicht auf 2-Ethylhexansäure, und speziell mindestens zwei aliphatische Dicarbonsäuren unter Verzicht auf Monocarbonsäuren,
- mindestens eine Azolverbindung
- Wasser
- optional Hartwasserstabilisator, Bitterstoff, Entschäumer und/oder Farbstoff. enthält,
mit der Maßgabe, dass keine anorganisches Salz ausgewählt aus der Gruppe bestehend aus Molybdaten, Boraten, Phosphaten, Silikaten, Nitriten und Nitraten in dem Kühlmittel anwesend sind.

4. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens eine aromatische organische Monocarbonsäure,
- mindestens ein anorganisches Salz ausgewählt aus der Gruppe bestehend aus Molybdaten, Boraten, Phosphaten, Silikaten, Nitriten und Nitraten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff enthält.

5. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono-oder Dicarbonsäure,
- mindestens ein anorganisches Salz ausgewählt aus der Gruppe bestehend aus Molybdaten, Boraten, Phosphaten, Silikaten und Nitraten, bevorzugt ausgewählt aus der Gruppe bestehend aus Phosphaten und Silikaten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff.
enthält.

6. Verwendung gemäß einem der vorstehenden Ansprüche, **dadurch gekennzeichnet, dass** das Kühlmittel eine Viskosität bei 20 °C gemäß ASTM D445 von nicht mehr als 3 mm²/s aufweist.

7. Verwendung gemäß einem der vorstehenden Ansprüche, **dadurch gekennzeichnet, dass** die Azolverbindung ausgewählt ist aus der Gruppe bestehend aus Benzotriazol und Tolutriazol.

8. Verwendung gemäß einem der Ansprüche 1 oder 3 bis 7, **dadurch gekennzeichnet, dass** die organische Monocarbonsäure Benzoesäure umfasst.

9. Verwendung gemäß einem der Ansprüche 1, 3 oder 5 bis 8, **dadurch gekennzeichnet, dass** die organische Monocarbonsäure 2-Ethylhexansäure oder Isononansäure, besonders bevorzugt Isononansäure umfasst.

10. Verwendung gemäß einem der Ansprüche 1 oder 3 bis 8, **dadurch gekennzeichnet, dass** die organische Dicarbonsäure ausgewählt ist aus der Gruppe bestehend aus Adipinsäure, Sebacinsäure und Dodekandisäure, bevorzugt aus der Gruppe bestehend aus Adipinsäure und Sebacinsäure.

11. Verwendung gemäß einem der vorstehenden Ansprüche, **dadurch gekennzeichnet, dass** das Kühlmittel zum Wärmemanagement von Generator und/oder Umrichter eingesetzt wird.

12. Verwendung gemäß einem der Ansprüche 1 bis 10, **dadurch gekennzeichnet, dass** das Kühlmittel zum Wärmemanagement von Getriebe und/oder Stellsystem eingesetzt wird.

13. Verfahren zum Befüllen des Kühlsystems einer Windkraftanlage mit einem Kühlmittel, in dem man an einem ersten Ort ein Konzentrat, enthaltend
- 0,1 bis 15 Gew% Wasser
- 50 bis 95 Gew% Alkylenglykol, Alkylenglykolmonoalkylether und Glycerin,
- in Summe 0,5 bis 15 Gew% der folgenden Komponenten:
-- optional mindestens eine organische Mono- oder Dicarbonsäure, bevorzugt aliphatische Mono- oder Dicarbonsäure,
-- optional mindestens ein anorganisches Salz ausgewählt aus der Gruppe bestehend aus Molybdaten, Boraten, Phosphaten, Silikaten, Nitriten und Nitraten,
-- mindestens eine Azolverbindung
-- optional mindestens einen Kieselsäureester,
-- optional mindestens ein Silikophosphonat, sofern Silikate anwesend sind, sowie
- optional 0 bis zu 3 Gew% weitere Inhibitoren und kühlmitteltypische Bestandteile,
mit der Maßgabe, dass die Summe aller Komponenten stets 100 Gew% ergibt,
mit der Maßgabe, dass mindestens eine Mono- oder Dicarbonsäure und/oder mindestens ein anorganisches Salz in dem Kühlmittel anwesend sind,
in einem Volumenverhältnis 1 : 1 bis 1 : 3 mit Wasser vermischt,
zur Windkraftanlage an einen zweiten Ort transportiert und dort das Kühlsystem der Windkraftanlage befüllt.

14. Verfahren gemäß Anspruch 13, **dadurch gekennzeichnet, dass** das Befüllen der Windkraftanlage bei einer Temperatur erfolgt, bei der das Kühlmittel eine Viskosität gemäß ASTM D445 von nicht mehr als 3 mm²/s aufweist.

15. Verfahren zum Wärmemanagement von Bestandteilen von Windkraftanlagen, in dem Wärme von mindestens einem Bestandteil einer Windkraftanlage ausgewählt aus der Gruppe bestehend aus
- Generator,
- Getriebe,
- Lager,
- Umrichter und
- Stellsystem
bei einer höheren Temperatur über mindestens einen ersten Wärmetauscher auf ein Kühlmittel übertragen wird, dieses Kühlmittel in einem Kühlkreislauf zu mindestens einem zweiten Wärmetauscher geführt wird und dort bei einer niedrigeren Temperatur Wärme vom Kühlmittel abgeführt wird, in dem
- als Kühlmittel eine Zusammensetzung wie in einem der Ansprüche 1 bis 9 eingesetzt wird,
- die höhere Temperatur von 20 bis 100 °C, bevorzugt 25 bis 80, besonders bevorzugt 30 bis 60 °C beträgt,
- die niedrigere Temperatur von minus 50 bis 40 °C, bevorzugt minus 40 bis 40, besonders bevorzugt minus 30 bis 35 °C beträgt und
- die niedrigere Temperatur mindestens 5 °C, bevorzugt mindestens 10, besonders bevorzugt mindestens 15 und ganz besonders bevorzugt mindestens 20 °C niedriger liegt als die höhere Temperatur.
